# EUROPÄISCHE PATENTSCHRIFT

(11) **EP 1 934 644 B1**
(45) Veröffentlichungstag und Bekanntmachung des Hinweises auf die Patenterteilung: **13.07.2011**
(21) Anmeldenummer: 06806048.2
(22) Anmeldetag: 05.10.2006
(51) Int. Cl.: G02B 13/00, G02B 26/08

(54) **SCANNERVORRICHTUNG MIT F/THETA-OBJEKTIV**
SCANNER DEVICE WITH F/THETA LENS SYSTEM
DISPOSITIF DE BALAYAGE AVEC OBJECTIF F/THETA

(30) Priorität: 07.10.2005 DE 202005015719 U
(43) Veröffentlichungstag der Anmeldung: 25.06.2008
(73) Patentinhaber: TRUMPF Laser GmbH + Co. KG, 78713 Schramberg (DE)
(72) Erfinder: VOSS, Andreas, 70563 Stuttgart (DE); HUONKER, Martin, 78661 Dietingen (DE); BRÜSTLE, Reiner, 78730 Lauterbach (DE)
(74) Vertreter: Kohler Schmid Möbus
(86) Internationale Anmeldenummer: PCT/EP2006/009636
(87) Internationale Veröffentlichungsnummer: WO 2007/042198

(56) Entgegenhaltungen:
- EP-A2- 1 063 048
- EP-A2- 1 081 525
- US-B1- 6 396 616

## Beschreibung

Die Erfindung betrifft eine Scannervorrichtung mit: mindestens einem planaren Scannerspiegel zur Ablenkung des Hochleistungs-Laserstrahls und mit einem dem Scannerspiegel im Strahlweg nachfolgenden F/theta-Objektiv zur Fokussierung des Hochleistungs-Laserstrahls in einem ebenen Bildfeld, wobei das Objektiv genau zwei im Strahlweg hintereinander angeordnete Linsen aufweist, die bei einer Laserstrahlungsleistung von mehr als 1 kW beständig sind, und wobei mindestens eine Linse eine oder zwei asphärische Linsenflächen aufweist.

In der Materialbearbeitung mit Hochleistungslasern werden zunehmend Scannervorrichtungen zur schnellen Positionierung des Laserstrahls eingesetzt. Sofern die Strahlablenkung mit Scannerspiegeln im (annähernd) kollimierten Strahl erfolgt, wird zur Fokussierung ein so genanntes F/theta-Objektiv eingesetzt, das sich insbesondere durch ein großes, planes Bildfeld auszeichnet.

Im Bereich bis etwa 1 kW mittlere Laserleistung sind solche F/theta-Objektive üblicherweise aus ca. 6 sphärischen Linsen aus verschiedenen, auch hochbrechenden Gläsern zusammengesetzt. Diese Objektive sind typischerweise für Beschriftungsanwendungen optimiert, d.h. sie weisen eine sehr hohe (nahe beugungsbegrenzte) Abbildungsqualität, aber nur eine mäßige Leistungsverträglichkeit auf. Im Bereich oberhalb 100-200 W mittlerer Leistung treten typischerweise eine deutliche Fokusverschiebung sowie eine thermisch bedingte Verschlechterung der Abbildungsqualität auf. Oberhalb von etwa 1 kW mittlerer Leistung sind die gebräuchlichen F/theta-Objektive entweder nur sehr bedingt oder überhaupt nicht zur Materialbearbeitung einsetzbar, da starke Einbußen in der Fokussierbarkeit der Strahlung und Beschädigungen durch Überhitzung der Linsen auftreten. Alternativ werden in Scannervorrichtungen Strahlführungssysteme mit Strahlablenkung im fokussierten Strahl eingesetzt, bei denen die Anforderungen an das Objektiv geringer sind. Allerdings wird dabei der nutzbare Arbeitsabstand durch die Scannerspiegel erheblich reduziert. Das Bildfeld ist in diesem Fall stark sphärisch gekrümmt, was üblicherweise durch eine z-Verstellung des Objektivs ausgeglichen wird. Bei großen Arbeitsabständen sind - abhängig von der numerischen Apertur des fokussierten Strahls - die erforderlichen Scannerspiegel sehr groß, wodurch ihre Dynamik eingeschränkt wird.

Aus der US 6,396,616 B1 ist ein Laser-Abbildungssystem bekannt, welches einen Scannerspiegel und ein F/theta-Objektiv mit einer sphärischen, einer asphärischen und einer torischen Linse aufweist, das zur Erhöhung der optischen Strahlleistung als verkleinernde Linse wirkt.

In der EP 1 063 048 A2 wird dargelegt, dass ein F/theta-Objektiv zur Erfüllung der F/theta-Eigenschaft, der Telezentrizität und der beugungsbegrenzten Konvergenz typischer Weise aus vier bis fünf Linsen besteht. Es wird ein einfaches Beispiel für ein F/theta-Objektiv mit nur zwei Linsen angegeben, von denen eine Linse eine asphärische Linsenfläche aufweist. Die Linsen bestehen aus Zinkselenid, das transparent für Strahlung im Infrarot-Bereich (um ca. 10,6 µm) ist und das einen Brechungsindex von ca. 2,4 aufweist.

Aus der EP 1 081 525 A2 ist ein F/theta-Objektiv bekannt geworden, welches drei Linsengruppen aufweist und welches in einer Scannervorrichtung für einen CO₂-Laser oder einen YAG-Laser eingesetzt werden kann. Die Linsen bestehen aus einem Material mit einem Brechungsindex größer als 2, wobei Zinkselenid und Germanium explizit als Linsenmaterialien genannt sind, aus denen asphärische Linsen hergestellt werden können.

Demgegenüber ist es die Aufgabe der vorliegenden Erfindung, eine Scannervorrichtung mit einem F/theta-Objektiv bereitzustellen, welches gegenüber konventionellen F/theta-Objektiven in Gewicht und Größe reduziert ist und welches insbesondere auch bei hohen Leistungsdichten betrieben werden kann.

Diese Aufgabe wird erfindungsgemäß durch eine Scannervorrichtung der eingangs genannten Art gelöst, bei der die beiden Linsen aus synthetischem Quarzglas bestehen, das bei einer Laserleistung von mehr als 1 kW beständig ist, wobei die erste im Strahlweg auf den Scannerspiegel folgende Linse eine annähernd halbkugelförmig gekrümmte Meniskuslinse ist, bei der im Strahlweg vor dem mindestens einen Scannerspiegel eine Wellenfrontkorrektur-Optik zur Korrektur eines Teils der sphärischen Aberrationen des F/theta-Objektivs angeordnet ist, die eine Kollimationslinse mit einer oder zwei asphärischen Linsenflächen oder eine Kombination aus einer sphärischen Kollimationslinse und einer Phasenkorrekturplatte aufweist, um eine im Mittel über den Scanbereich verbesserte Abbildungsqualität zu ermöglichen, wobei die Scannervorrichtung eine Lichtleitfaser zur Zuführung des Hochleistungs-Laserstrahls mit einer Laserstrahlungsleistung von mehr als 1 kW zu der Kollimationslinse aufweist.

Ein für Hochleistungsanwendungen besonders geeignetes F/theta-Objektiv wird dadurch erzielt, dass die Anzahl der verwendeten Linsen auf das für die Anwendung erforderliche Mindestmaß (genau zwei) reduziert wird. Um die Anzahl der Linsen bei der geforderten Abbildungsqualität minimieren zu können, wird mindestens eine asphärische Linsenfläche verwendet. Asphärische Linsenflächen weisen im Vergleich zu sphärischen Flächen zusätzliche Freiheitsgrade auf, mit deren Hilfe insbesondere Abbildungsfehler höherer Ordnung, die besonders bei großen Scanwinkeln ins Gewicht fallen, kompensiert werden können. Hierbei wird auf eine vollständige Ebnung des Bildfeldes verzichtet; stattdessen wird eine sog. Ebnung im Mittel durchgeführt, d.h. es verbleibt ein vom Ablenkwinkel abhängiger Astigmatismus im fokussierten Strahl.

Die beiden Linsen bestehen aus synthetischem Quarzglas. Die Auswahl der optischen Materialien für die Linsen erfolgt insbesondere unter den Aspekten geringe Absorption, geringe thermooptische Effekte und hohe Belastbarkeit. Das bevorzugte Material für den UVNIS/NIR-Bereich (ca. 170 nm - 3 µm) ist synthetisches Quarzglas. Nachteilig ist der niedrige Brechungsindex (n - 1,45) von Quarzglas, was - im Vergleich zu hochbrechenden optischen Gläsern (n - 1,65 -1,85), wie sie in üblichen F/theta-Objektiven verwendet werden - zu stärker gekrümmten Oberflächen und somit i.A, zu höheren Abbildungsfehlern sowie erhöhten Verlusten an den Antireflex-Beschichtungen führt. Weiterhin lässt sich bei ausschließlicher Verwendung nur einer Glassorte (z.B. Quarzglas) kein achromatisches Objektiv realisieren. Die Dispersion von Quarzglas im VIS- und NIR-Bereich ist jedoch ausreichend gering, so dass die z.B. bei koaxialer Beobachtung durch das Objektiv hindurch auftretenden chromatischen Fehler in einem akzeptablen Rahmen bleiben. Selbstverständlich können auch andere optische Materialien, welche geringe Absorption, geringe thermooptische Effekte und eine hohe thermische Belastbarkeit aufweisen (z. B. YAG oder Saphir), als Linsenmaterial zum Einsatz kommen.

Die erste im Strahlweg auf den Scannerspiegel folgende Linse ist eine Meniskuslinse. Die Meniskuslinse ist objektseitig so stark wie möglich, d.h. annähernd halbkugelförmig, konkav gekrümmte, um bei möglichst geringer Linsendicke eine Ebnung des Bildfeldes (im Mittel) durch Strahlaufweitung zu ermöglichen. Die zweite Seite der Meniskuslinse ist vorzugsweise annähernd konzentrisch zur ersten, so dass sich insgesamt eine geringe (negative) Brechkraft ergibt.

Bei einer vorteilhaften Ausführungsform ist die zweite im Strahlweg auf den Scannerspiegel folgende Linse eine Fokussierlinse mit einer asphärischen Linsenfläche. Die asphärische Fokussierlinse kann als Plankonvexlinse, Meniskuslinse oder als Bikonvexlinse ausgeführt sein und bewirkt die Fokussierung des Strahls sowie die Minimierung von sphärischer Aberration, Astigmatismus und Fehlern höherer Ordnung. Durch die Brechkraft der Fokussierlinse wird außerdem die Brennweite des Objektivs festgelegt.

Durch die im Strahlweg vor dem F/theta-Objektiv angeordnete Wellenfrontkorrektur-Optik wird eine zur Minimierung der erforderlichen Linsenanzahl im F/theta-Objektiv beitragende erste Korrektur der Wellenfront der zu fokussierenden Strahlung bereits vor den Scannerspiegeln vorgenommen .

Die Wellenfrontkorrektur-Optik kann hierbei eine Kollimationslinse mit einer oder zwei asphärischen Linsenflächen aufweisen. Üblicherweise ist eine sphärische Kollimationslinse in der Scannervorrichtung zur Kollimation des aus einer Lichtleitfaser austretenden divergenten Strahls vorgesehen. Die asphärische Kollimationslinse ersetzt diese konventionelle Kollimationslinse, die lediglich einen bestmöglichen Parallelstrahl erzeugen soll. Neben der Kollimation übernimmt diese Linse auch eine Feinkorrektur der Wellenfronten, die im Zusammenspiel mit den beiden Linsen des F/theta-Objektivs eine im Mittel über den Scanbereich bessere Abbildungsqualität ermöglicht, als dies mit einer konventionellen Kollimationslinse möglich wäre. Die asphärische Kollimationslinse übernimmt unter anderem einen Teil der Korrektur der sphärischen Aberrationen. Alternativ weist die Wellenfrontkorrektur-Optik eine Phasenkorrekturplatte auf, welche zur Wellenfrontkorrektur dient und welche mit einer konventionellen, sphärischen Kollimationslinse kombiniert wird. Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: einen Längsschnitt durch eine Ausführungsform des erfindungs- gemäßen F/theta-Objektivs; und
- Fig. 2: einen Längsschnitt durch eine Ausführungsform der erfindungs- gemäßen Scannervorrichtung mit dem F/theta-Objektiv von Fig. 1.

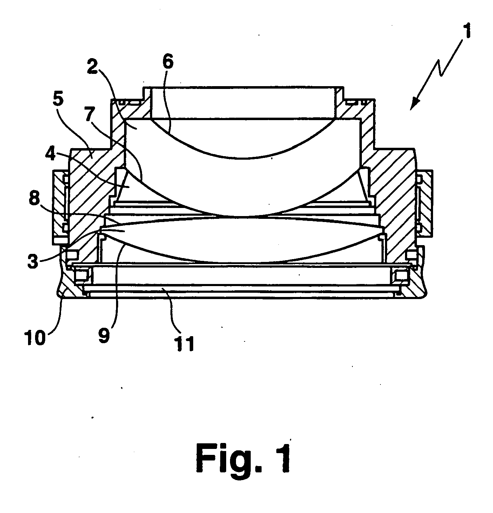

Das in **Fig. 1** gezeigte F/theta-Objektiv **1** umfasst eine Meniskuslinse **2** und eine Fokussierlinse **3,** welche in einer Linsenfassung **4** angebracht sind, die in einem Objektivgehäuse **5** angeordnet ist.

Die Meniskuslinse 2 weist objektseitig eine annähernd halbkugelförmig konkav gekrümmte erste Linsenfläche **6** auf, um bei möglichst geringer Linsendicke eine Ebnung des Bildfeldes (im Mittel) durch Strahlaufweitung zu ermöglichen. Die zweite, bildseitige Linsenfläche **7** der Meniskuslinse 2 ist annähernd konzentrisch zur ersten Linsenfläche 6, so dass sich insgesamt eine geringe (negative) Brechkraft ergibt. Die Fokussierlinse 3 ist eine Bikonvexlinse mit einer sphänrischen Linsenfläche 8 und einer asphärischen Linsenfläche **9**. Die Fokussierlinse 3 bewirkt die Fokussierung eines in Fig. 1 nicht bildlich dargestellten Laserstrahls unter Minimierung von sphärischer Aberration, Astigmatismus und Fehlern höherer Ordnung durch Ausnutzung zusätzlicher Freiheitsgrade, welche durch die asphärische Linsenfläche 8 bewirkt werden. Durch die Brechkraft der Fokussierlinse 3 wird die Brennweite des F/theta-Objektivs 1 festgelegt.

Das F/theta-Objektiv 1 umfasst weiterhin eine bildseitig angebrachte Halterung 10 für ein Schutzglas **11**, welche auf das Gehäuse 5 des Objektivs 1 aufgeschnappt werden kann, wie im eingetragenen Gebrauchsmuster DE 20 2004 019 487.2 der Anmelderin näher beschrieben.

Die Meniskuslinse **2** und die Fokussierlinse 3 bestehen aus wasserfreiem, synthetischen Quarzglas, wodurch eine sehr geringe Absorption der Laserstrahlung und eine geringe Wärmeausdehnung des Linsensystems unter gleichzeitiger Steigerung der Leistungsverträglichkeit des Objektivs 1 auf mindestens 4-6 kW erreicht wird. Weiterhin lassen sich mit der gezeigten Bauform große Gewichts- und Größeneinsparungen gegenüber einem konventionellen F/theta-Objektiv mit einer typischerweise größeren Linsenanzahl erreichen. Aufgrund der minimierten Komponentenzahl ist das optische System trotz Verwendung von im Vergleich zu sphärischen Linsen weniger kostengünstigen Asphären insgesamt dennoch kostengünstig herstellbar.

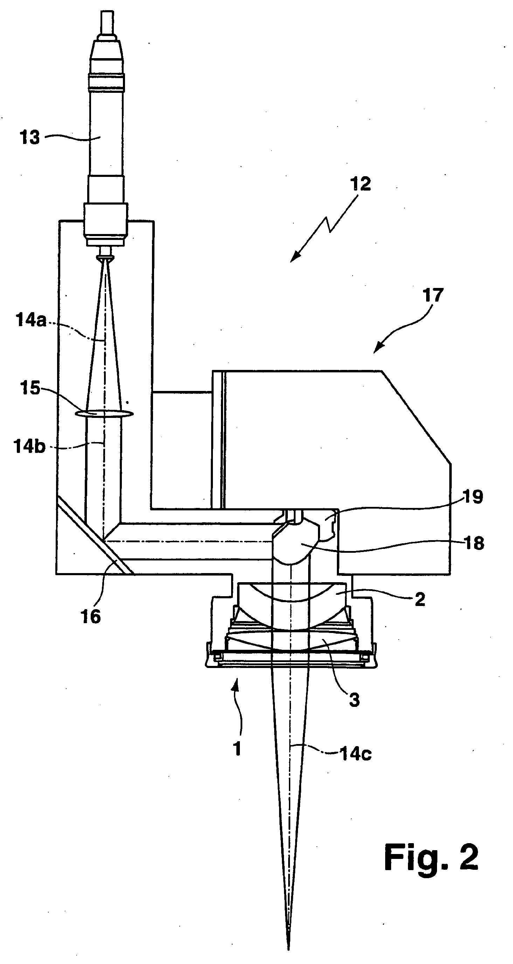

**Fig. 2** zeigt das F/theta-Objektiv 1 im Einbauzustand in einer Scannervorrichtung **12** zur Materialbearbeitung. Diese weist eine Lichtleitfaser **13** auf, aus der ein divergenter Laserstrahl **14a** mit hoher Strahlleistung (> 1kW) austritt, welcher in vertikaler Richtung durch die Scannervorrichtung 12 läuft und mittels einer Kollimationslinse **15** in einen weiterhin vertikal verlaufenden, kollimierten Laserstrahl **14b** transformiert wird.

Im Gegensatz zu einer konventionellen Kollimationslinse, die lediglich einen bestmöglichen Parallelstrahl erzeugen soll, weist die Kollimationslinse 15 eine speziell optimierte asphärische Linsenfläche auf. Neben der Strahl-Kollimation dient die Kollimationslinse 15 daher auch als Wellenfront-Korrekturoptik und übernimmt eine Feinkorrektur der Wellenfronten, insbesondere einen Teil der Korrektur der sphärischen Aberrationen, wodurch im Zusammenspiel mit der Meniskuslinse 2 und der Fokussierlinse 3 des F/theta-Objektivs 1 eine im Mittel über den Scanbereich bessere Abbildungsqualität ermöglicht wird, als dies mit einer konventionellen Kollimationslinse möglich wäre. Alternativ kann die asphärische Kollimationslinse 15 auch durch eine (nicht gezeigte) Kombination aus einer sphärischen Kollimationslinse und einer Phasenkorrekturplatte ersetzt sein.

Der kollimierte Laserstrahl 14b wird an einem Umlenkspiegel **16** um 90° aus der vertikalen Richtung in die horizontale Richtung abgelenkt und tritt über eine Eintrittsapertur in den Scankopf **17** ein. Im Scankopf 17 trifft der kollimierte Laserstrahl 14b zuerst auf einen planaren X-Scannerspiegel **18,** welcher den Strahl in X-Richtung auf einen planaren Y-Scannerspiegel **19** ablenkt, der den Strahl weiter in Y-Richtung ablenkt. Der X-Scannerspiegel 18 und der Y-Scannerspiegel 19 sind an Galvanometern befestigt und können gedreht werden. Die Position der Drehachse der Galvanometer bestimmt den Ablenkwinkel des jeweiligen Scannerspiegels 18, 19 und so die Position des Laserstrahls im (nicht gezeigten) Bildfeld.

Der kollimierte Laserstrahl 14b verlässt den Scankopf 17 durch eine Austrittsöffnung, welche mit dem F-Theta-Objektiv 1 von Fig. 1 versehen ist. Dieses bewirkt mittels der Meniskuslinse 2 eine Aufweitung des Laserstrahls 14b zur Erzeugung eines möglichst großen Bildfeldes, sowie mittels der nachfolgenden Fokussierlinse 3 die Umwandlung des aufgeweiteten Laserstrahls in einen konvergenten Laserstrahl **14c,** der in einem Fokuspunkt fokussiert wird, um den herum durch die Linsenanordnung im F/theta-Objektiv 1 ein im Mittel flaches Bildfeld erzeugt wird.

Da das in der Scannervorrichtung 12 vorhandene optische System nicht vollständig korrigert ("beugungsbegrenzt") ist, ist es das Ziel, die Abbildungsfehler bei allen Auslenkungen der Scannerspiegel 18, 19 in erträglichen Grenzen zu halten. Hierbei wird in Kauf genommen, dass bei geringen Auslenkungen derselben eine Verschlechterung der Abbildung im Vergleich zu einem System aus sphärischen Linsen auftritt. Die gezielte Wellenfrontverzerrung des kollimierten Laserstrahls 14b durch die Kollimationslinse 15 oder auch durch eine separate Korrekturplatte erzeugt bei den kritischen, großen Auslenkungen der Scannerspiegel 18, 19 eine entscheidende Verbesserung der Abbildung, während sie bei kleinen Auslenkungen eine geringfügige und somit akzeptable Verschlechterung bewirkt. In dem erfindungsgemäßen F/theta-Objektiv 1 wird aufgrund der Verwendung von synthetischem Quarzglas als besonders leistungstauglichem optischem Material bewusst auf die Korrektur der chromatischen Aberration verzichtet. Weiterhin verbleibt ein gewisser Restastigmatismus, da nur eine Bildfeldebnung im Mittel stattfindet. Dem gegenüber steht eine erhebliche Kosten- sowie Gewichtsreduktion durch die Verwendung einer geringeren Anzahl von optischen Komponenten im F/theta-Objektiv 1 und eine wesentlich höhere Laserbeständigkeit auch bei Laserleistungen oberhalb von 1 kW bis hin zu ca. 10 kW, wodurch der Einsatz von F/theta-Objektiven in Hochleistungsanwendungen, bei denen eine Strahlumlenkung im kollimierten Strahl erfolgt, erst ermöglicht wird.

## Patentansprüche

1. Scannervorrichtung (12) für einen Hochleistungs-Laserstrahl mit mindestens einem planaren Scannerspiegel (18, 19) zur Ablenkung des Laserstrahls und mit einem dem Scannerspiegel (18, 19) im Strahlweg nachfolgenden F/theta-Objektiv (1) zur Fokussierung des Hochleistungs-Laserstrahls in einem ebenen Bildfeld, wobei das Objektiv (1) genau zwei im Strahlweg hintereinander angeordnete Linsen (2, 3) aufweist, und wobei mindestens eine Linse (3) eine oder zwei asphärische Linsenflächen (8) aufweist,
**dadurch gekennzeichnet,**
**dass** die beiden Linsen (2, 3) aus synthetischem Quarzglas bestehen, das bei einer Laserstrahlungsleistung von mehr als 1 kW beständig ist, dass die erste im Strahlweg auf den Scannerspiegel (18, 19) folgende Linse (2) eine annähernd halbkugelförmige gekrümmte Meniskuslinse ist, dass im Strahlweg vor dem mindestens einen Scannerspiegel (18, 19) eine Wellenfrontkorrektur-Optik zur Korrektur eines Teils der sphärischen Aberrationen des F/theta-Objektivs (1) angeordnet ist, die eine Kollimationslinse (15) mit einer oder zwei asphärischen Linsenflächen oder eine Kombination aus einer sphärischer Kollimationslinse und Phasenkorrekturplatte aufweist, um eine im Mittel über den Scanbereich verbesserte Abbildungsqualität zu ermöglichen, und dass die Scannervorrichtung (12) eine Lichtleitfaser (13) zur Zuführung des Hochleistungs-Laserstrahls mit einer Laserstrahlleistung von mehr als 1 kW zu der Kollimationslinse (15) aufweist.

2. Scannervorrichtung nach Anspruch 1, **dadurch gekennzeichnet, dass** die zweite im Strahlweg auf den Scannerspiegel (18, 19) folgende Linse eine Fokussierlinse (3) mit einer asphärischen Linsenfläche (8) ist.

## Claims

1. Scanner device (12) for a high power laser beam, comprising at least one planar scanner mirror (18, 19) for deflecting the laser beam and an F/theta lens system (1) disposed in the optical path downstream of the scanner mirror (18, 19) for focussing the high power laser beam in a flat image field, wherein the lens system (1) has exactly two lenses (2, 3) which are disposed behind one another in the optical path, and wherein at least one lens (3) has one or two aspherical lens surfaces (8),
**characterized in that**
the two lenses (2, 3) consist of synthetic quartz glass which is stable at a laser radiation power of more than 1 kW,
that the first lens (2) arranged downstream of the scanner mirror (18, 19) in the optical path is an approximately hemispherical curved meniscus lens, that a wavefront correcting optics is arranged in the optical path upstream of the at least one scanner mirror (18, 19) for correcting part of the spherical aberrations of the F/theta lens system (1), which comprises a collimation lens (15) with one or two aspherical lens surfaces or a combination of a spherical collimation lens and phase correction plate in order to improve the imaging quality on average over the scanning area, and that the scanner device (12) has an optical fiber (13) for supplying the high power laser beam having a laser beam power of more than 1 kW to the collimation lens (15).

2. Scanner device according to claim 1, **characterized in that** the second lens disposed in the optical path downstream of the scanner mirror (18, 19) is a focussing lens (3) having an aspherical lens surface (8).

## Revendications

1. Dispositif de balayage (12) pour un faisceau laser à grande puissance, avec au moins un miroir de balayage planaire (18, 19) pour dévier le faisceau laser et avec un objectif F/thêta (1) faisant suite au miroir de balayage (18, 19) dans le chemin du faisceau pour focaliser le faisceau laser à grande puissance dans un champ d'image plan, l'objectif (1) présentant exactement deux lentilles (2, 3) disposées l'une derrière l'autre dans le chemin du faisceau, et au moins une lentille (3) présentant une ou deux surfaces de lentille asphériques (8),
**caractérisé en ce**
**que** les deux lentilles (2, 3) sont en verre de quartz synthétique qui est résistant à une puissance de rayonnement laser supérieure à 1 kW, que la première lentille (2) qui suit le miroir de balayage (18, 19) dans le chemin du faisceau est une lentille ménisque de courbure à peu près hémisphérique, qu'une optique de correction du front d'onde pour corriger une partie des aberrations sphériques de l'objectif F/thêta (1) est disposée dans le chemin du faisceau avant ledit au moins un miroir de balayage (18, 19), laquelle présente une lentille de collimation (15) avec une ou deux surfaces de lentille asphériques ou une combinaison d'une lentille de collimation sphérique et d'une plaque de correction de phase pour permettre une qualité de reproduction améliorée en moyenne sur la plage de balayage, et que le dispositif de balayage (12) présente une fibre conductrice de lumière (13) pour l'amenée du faisceau laser à grande puissance, d'une puissance de rayonnement laser supérieure à 1 kW, à la lentille de collimation (15).

2. Dispositif de balayage selon la revendication 1, **caractérisé en que** la deuxième lentille qui suit le miroir de balayage (18, 19) dans le chemin du faisceau est une lentille de focalisation (3) avec une surface de lentille asphérique (8).
